**Europäisches Patentamt**

**European Patent Office**

**Office européen des brevets**

(19)

(11) Veröffentlichungsnummer: **0 207 217 B1**

(12) # EUROPÄISCHE PATENTSCHRIFT

(45) Veröffentlichungstag der Patentschrift: **14.08.91**

(51) Int. Cl.⁵: **G06K 11/06**

(21) Anmeldenummer: **86102597.1**

(22) Anmeldetag: **28.02.86**

(54) **Koordinatenmessvorrichtung.**

(30) Priorität: **01.04.85 DE 3511864**

(43) Veröffentlichungstag der Anmeldung:
**07.01.87 Patentblatt 87/02**

(45) Bekanntmachung des Hinweises auf die
Patenterteilung:
**14.08.91 Patentblatt 91/33**

(84) Benannte Vertragsstaaten:
**CH DE FR GB IT LI**

(56) Entgegenhaltungen:
**DE-A- 3 243 712**
**DE-B- 2 320 931**
**US-A- 4 088 842**

(73) Patentinhaber: **KONTRON ELEKTRONIK GMBH**
**Oskar-von-Miller-Strasse 1**
**W-8057 Eching(DE)**

(72) Erfinder: **Jacob-Grinschgl, Wolfgang**
**Rumfordstrasse 40**
**W-8000 München(DE)**
Erfinder: **Müller, Udo**
**Furtweg 20 b**
**W-8044 Unterschleissheim(DE)**

(74) Vertreter: **Dirscherl, Josef et al**
**c/o Bayerische Motoren Werke Aktiengesell-**
**schaft, Patentabteilung AJ-3, Postfach 40 02**
**40, Petuelring 130**
**W-8000 München 40(DE)**

## Beschreibung

Die Erfindung betrifft eine Koordinatenmeßvorrichtung, die gemäß einer ersten Ausführungsform im Oberbegriff des Patentanspruchs 1 beschrieben ist. Ferner betrifft die Erfindung eine Koordinatenmeßvorrichtung, wie sie gemäß einer zweiten Ausführungsform der Erfindung im Oberbegriff des unabhängigen Patentanspruchs 7 beschrieben ist.

Aus der US-PS 4 088 842 ist sowohl eine Koordinatenmeßvorrichtung, wie sie im Oberbegriff des Patentanspruchs 1 beschrieben ist, als auch eine Koordinatenmeßvorrichtung nach dem Oberbegriff des unabhängigen Patentanspruchs 7 bekannt. Eine erste, aus der US-PS 4 088 842 bekannte Ausführungsform einer Koordinatenmeßvorrichtung umfaßt ein Digitalisiertablett, einen induktiven Koordinatenmeßaufnehmer und eine Auswerteschaltung für ein Meßsignal. Das Digitalisiertablett ist für jede Koordinate mit mehreren in gleichem Abstand voneinander angeordneten Gitterleitern versehen, die über eine Schaltvorrichtung in bestimmter Reihenfolge aktivierbar sind. Dem Koordinatenmeßaufnehmer wird ein zur Erzeugung einer Induktionsspannung geeigneter Strom zugeführt. Das dadurch in den jeweils aktivierten Gitterleitern erzeugte Induktionssignal wird nach Filterung durch ein lineares Filter als Meßsignal der Auswerteschaltung zugeführt.

Eine zweite aus der US-PS 4 088 842 bekannte Ausführungsform einer Koordinatenmeßvorrichtung enthält ebenso wie die vorstehend beschriebene erste Ausführungsform einen Koordinatenmeßaufnehmer, ein Digitalisiertablett, das für jede Koordinate mit mehreren in gleichem Abstand voneinander angeordneten Gitterleitern versehen ist, die über eine Schaltvorrichtung in bestimmter Reihenfolge aktivierbar sind, sowie eine Auswerteschaltung für das Meßsignal. Im Unterschied zur ersten Ausführungsform wird bei der zweiten Ausführungsform der Koordinatenmeßvorrichtung den aktivierten Gitterleitern ein zur Erzeugung einer Induktionsspannung geeigneter Strom zugeführt. Das dadurch in dem Koordinatenmeßaufnehmer erzeugte Induktionssignal wird dann nach Filterung durch ein lineares Filter als Meßsignal der Auswerteschaltung zugeführt.

Der Erfindung liegt die Aufgabe zugrunde, eine Koordinatenmeßvorrichtung eingangs genannter Art zu schaffen, die sich durch einen vereinfachten Aufbau, insbesondere durch eine vereinfachte Auswerteschaltung auszeichnet.

Diese Aufgabe wird bei einer Koordinatenmeßvorrichtung nach dem Oberbegriff des Patentanspruchs 1 dadurch gelöst, daß der den Koordinatenmeßaufnehmer speisende Strom einen dreieckförmigen Verlauf hat. Bei einer Koordinatenmeßvorrichtung nach dem Oberbegriff des unabhängigen Patentanspruchs 7 wird die Aufgabe hingegen erfindungsgemäß dadurch gelöst, daß die aktivierten Gitterleiter mit einem konstanten Gleichstrom gespeist werden.

Vorteilhafte Weiterbildungen der beiden erfindungsgemäßen Ausführungsformen einer Koordinatenmeßvorrichtung sind Gegenstand der Unteransprüche.

Eine Weiterbildung der im Patentanspruch 1 beschriebenen Ausführungsform einer Koordinatenmeßvorrichtung ist darin zu sehen, daß die ansteigende und abfallende Flanke des Stromes denselben Absolutwert der Steigung aufweisen, daß die Gitterleiter sowohl während der ansteigenden als auch während der abfallenden Flanke des Stromes aktiviert werden, und daß die Neigungsänderung des Stromes während der Umschaltpausen erfolgt.

Alternativ kann der Strom auch einen sägezahnförmigen Verlauf haben. In diesem Fall wird nur die ansteigende, lang dauernde Flanke verwendet.

Gemäß einer besonderen Ausbildung ist die Frequenz des Stromes gleich der Umschaltfrequenz.

Es ist jedoch auch möglich, das Verhältnis der Umschaltfrequenz zu der Frequenz des Stromes gleich einer ganzen Zahl zu machen, die zwischen 1 und der Zahl der Umschaltvorgänge pro Abtastzyklus liegt.

Eine besonders vorteilhafte Ausbildung besteht darin, daß diejenigen Flanken des Stromes, während denen eine Aktivierung der Gitterleiter erfolgt, sich über eine Zeitdauer erstrecken, die mindestens gleich der Dauer eines Abtastzyklus der Gitterleiter ist, und daß jeder Abtastzyklus jeweils während des Auftretens dieser Flanke abläuft. Hierbei entsteht die geringstmögliche Störung durch unerwünschte Schaltfrequenzanteile.

Wenn die Gitterleiter gemäß der zweiten Ausführungsform der erfindungsgemäßen Koordinatenmeßvorrichtung als Sender dienen und mit Strom gespeist werden, kann dieser Strom im Unterschied zur Verwendung des Koordinatenmeßaufnehmers als Sender, der zur Induzierung einer Induktionsspannung in den Gitterleitern mit einem sich ändernden Strom, etwa Wechselstrom, gespeist werden muß, ein konstanter Gleichstrom sein, da durch das Umschalten dann in dem Koordinatenmeßaufnehmer eine Induktionsspannung erzeugt wird.

Bei beiden Ausführungsformen der erfindungsgemäßen Koordinatenmeßvorrichtung ist es vorteilhaft, wenn die Umschaltpausen der Schaltvorrichtung kleiner sind als die Aktivierungszeiten der Gitterleiter.

Vorzugsweise sind die Umschaltpausen mindestens um den Faktor 3 und besser noch um den Faktor 10 kleiner als die Aktivierungszeiten der Gitterleiter.

Der einfachste Schaltungsaufbau und die günstigsten Eigenschaften ergeben sich, wenn die Schaltvorrichtung ohne Umschaltpausen umschaltet.

Gemäß einer besonderen Ausbildung ist das Filter ein Tiefpaßfilter mit einer Grenzfrequenz, die kleiner ist als die Schaltfrequenz der Schaltvorrichtung.

Es ist besonders günstig, wenn das Filter ein Tiefpaßfilter höherer Ordnung ist, da hierdurch eine wesentlich bessere Unterdrückung der unerwünschten Frequenzen ermöglicht wird.

Der Ausdruck "Positionsmeßaufnehmer" soll nicht im elektrischen Sinn verstanden sein, sondern in seiner geometrischen Bedeutung, d. h. als Aufnehmer für die Koordinaten seiner Lage auf dem Digitalisiertablett.

Die Erfindung ist im folgenden anhand schematischer Zeichnungen an einem Ausführungsbeispiel ergänzend beschrieben.

Fig. 1    zeigt ein Digitalisiertablett mit zugeordneter Schaltvorrichtung sowie einen Meßaufnehmer;

Fig. 2    zeigt eine Auswerteschaltung für das Meßsignal;

Fig. 3    zeigt den Verlauf des Magnetflusses durch den Meßaufnehmer als Funktion der Zeit;

Fig. 4    zeigt die Spannung am Ausgang der Auswerteschaltung von Fig. 2;

Fig. 5    zeigt eine der Fig. 3 entsprechende Kurvendarstellung über einen längeren Zeitabschnitt;

Fig. 6    zeigt die Spannung am Ausgang der Auswerteschaltung;

Fig. 7    zeigt eine Koordinatenmeßvorrichtung, bei der der Meßaufnehmer mit Strom gespeist ist und die Gitterleiter als Empfänger dienen, und

Fig. 8    zeigt verschiedene Möglichkeiten des Betriebes der Schaltung nach Fig. 7.

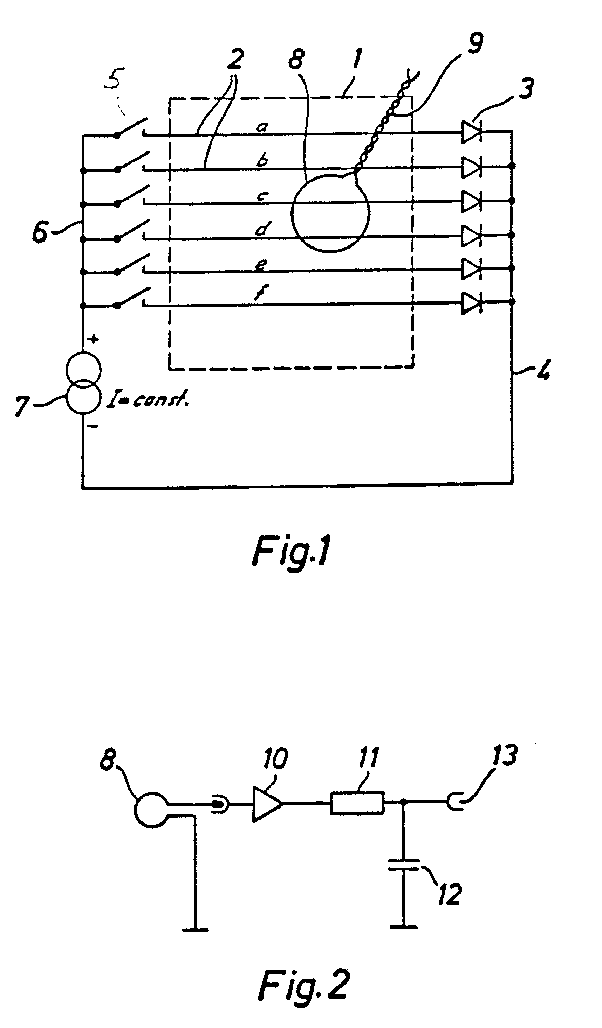

Das in Fig. 1 dargestellte Digitalisiertablett, auch Meßtablett genannt, umfaßt für jede der beiden Koordinatenrichtungen eine Anzahl Gitterleiter, wobei lediglich die horizontalen Gitterleiter 2a bis 2f in Fig. 1 dargestellt sind. Jeder dieser Gitterleiter ist über eine zugeordnete Trenndiode 3 mit einer negativen Speiseleitung verbunden, während die anderen Enden der Gitterleiter über jeweils einen steuerbaren Schalter 5 mit einer positiven Speiseleitung 6 verbunden sind. Die beiden Speiseleitungen führen an eine Konstantstromquelle 7.

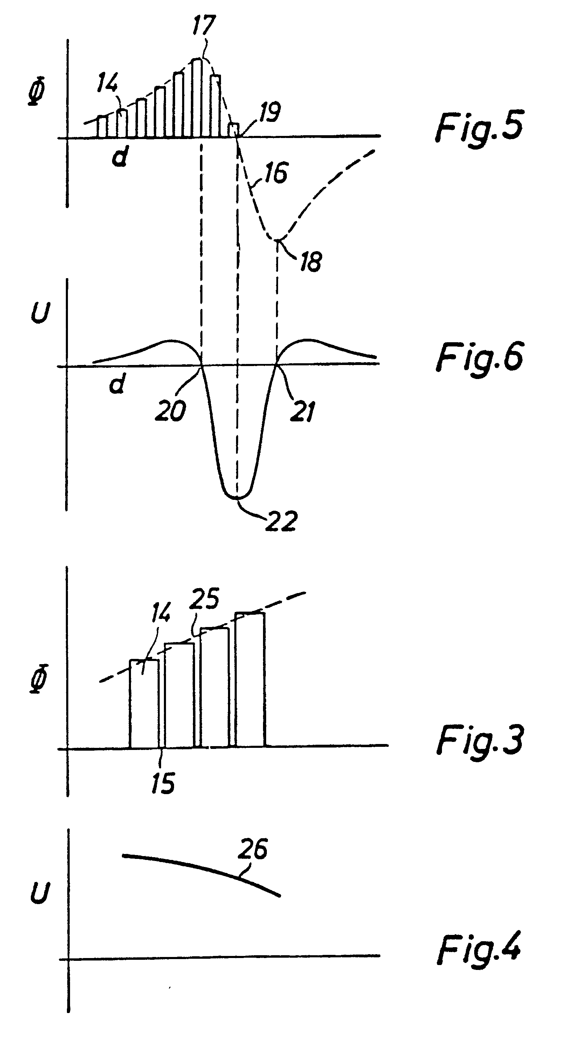

Beim Betrieb des Digitalisiertabletts werden die Gitterleiter 2a bis 2f nacheinander einzeln eingeschaltet, so daß ein Gleichstrom in ihnen fließt. Dabei wird die Meßspule des Meßaufnehmers 8 von einem Magnetfluß durchsetzt, der bei Erregung entfernt von dem Meßaufnehmer liegender Gitterleiter klein ist und bei Erregung der dem Meßaufnehmer näher liegenden Leitungen immer größer wird. Diese Verhältnisse sind in Fig. 3 dargestellt, die den die Meßspule durchsetzenden Magnetfluß als Funktion der Zeit zeigt. Man erkennt, daß die Magnetflußdauer eines Magnetflußimpulses 14, die der Stromflußdauer in einem Gitterleiter entspricht, wesentlich größer ist als der flußlose Bereich 15, der den stromlosen Umschaltpausen zwischen den einzelnen Gitterleitern entspricht. Der geglättete Verlauf des Magnetflusses ist in Fig. 3 durch die gestrichelte Linie 25 dargestellt.

Fig. 4 zeigt die Induktionsspannung 26 in idealisierter Darstellung. Da die Induktionsspannung der ersten Ableitung des zeitlichen Verlaufs des Magnetflusses entspricht, ergibt sich der in Fig. 4 dargestellte Kurvenverlauf.

Fig. 5 zeigt den zeitlichen Verlauf des Magnetflusses während der aufeinanderfolgenden Erregung sämtlicher einer Koordinatenrichtung zugeordneter Gitterleiter eines Digitalisiertabletts. Aus zeichnerischen Gründen sind dabei die Umschaltpausen verhältnismäßig zu groß eingezeichnet.

In Fig. 1 sind aus zeichnerischen Gründen lediglich sechs Gitterleiter dargestellt, während tatsächlich eine wesentlich größere Anzahl verwendet wird.

Man erkennt aus Fig. 5, daß die Hüllkurve 16 des Magnetflusses durch die Meßspule des Meßaufnehmers ein positives Maximum 17, ein negatives Maximum 18 und einen Nulldurchgang 19 aufweist. Die Maxima treten auf, wenn ein Gitterleiter nahe dem Rand der Meßspule des Meßaufnehmers erregt wird, beispielsweise der Gitterleiter 2b in Fig. 1. Der Nulldurchgang 19 tritt auf, wenn der erregte Gitterleiter durch den Mittelpunkt des Meßaufnehmers 8 verläuft.

Die in Fig. 2 dargestellte Auswerteschaltung umfaßt einen Verstärker 10 und einen Tiefpaß, der aus einem Widerstand 11 und einem Kondensator 12 gebildet ist. Am Ausgang 13 der Auswerteschaltung tritt eine Spannung auf, deren Verlauf in Fig. 6 dargestellt ist. Der Tiefpaß 11, 12 ist so dimensioniert, daß diejenigen Frequenzanteile, die durch das Umschalten und die Umschaltpausen zwischen den einzelnen Gitterleitern entstehen, ausgefiltert werden, so daß die Spannung am Ausgang 13 der Induktionsspannung und damit der ersten Ableitung der Hüllkurve 16 des Magnetflusses entspricht.

Je kürzer die Umschaltpausen, also die magnetflußlosen Bereiche 15 gemacht werden, desto leichter lassen sich die unerwünschten Frequenzanteile ausfiltern, so daß angestrebt werden sollte, die Umschaltpausen so klein wie praktisch möglich zu machen.

Anstelle des in Fig. 2 dargestellten Tiefpaßfilters erster Ordnung ist es günstiger, Tiefpaßfilter höherer Ordnung zu verwenden, beispielsweise einen Tiefpaß dritter oder vierter Ordnung mit Butterworth- oder Tschebyscheff-Charakteristik. Je länger die Umschaltzeiten im Vergleich zu den Stromflußzeiten sind, desto wichtiger ist es, einen steilflankigen Tiefpaßfilter höherer Ordnung zu verwenden.

Der Nulldurchgang 19, dessen zeitlicher Abstand vom Beginn der Stromspeisung ein Maß für die Lage des Meßaufnehmers 8 ist, entspricht dem negativen Maximum 22 der am Ausgang 13 vorhandenen Spannung. Durch Differenzieren derselben erhält man eine Spannung, deren zweiter Nulldurchgang dem Nulldurchgang 19 von Fig. 5 entspricht.

Schaltungen für diesen Zweck sind Stand der Technik.

Da die Gitterleiter mit Gleichstrom erregt werden, ist es anzustreben, die Umschaltfrequenz der Schaltvorrichtung möglichst hoch zu legen, damit das Nutzsignal einen genügenden Abstand von den Störspannungen hat. Zu diesem Zweck genügt es, wenn die Umschaltfrequenz zwischen 100 Hz und einigen kHz gewählt wird.

Die Koordinatenmeßvorrichtung läßt sich mit wesentlich weniger Bauteilen realisieren als die bekannten Koordinatenmeßvorrichtungen und ermöglicht die Verwendung einer höheren Schaltfrequenz für die Umschaltung des Erregerstromes auf die einzelnen Gitterleiterungen.

In dem vorhergehend beschriebenen Ausführungsbeispiel sind die Gitterleiter als Sender verwendet und der Meßaufnehmer als Empfänger.

Alternativ kann jedoch der Meßaufnehmer im Rahmen der Erfindung auch als Sender und die Gitterleiter als Empfänger verwendet werden. Da dabei jedoch durch das Umschalten der Gitterleiter allein noch keine Induktionsspannung auftritt, muß der Meßaufnehmer mit einem sich ändernden Strom gespeist werden.

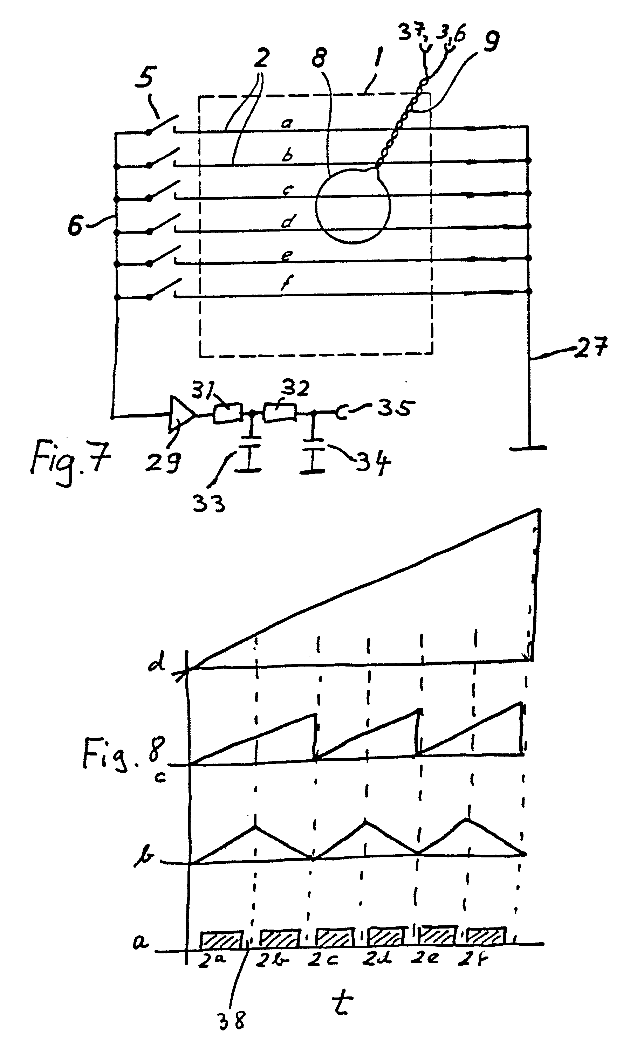

Das in Fig. 7 dargestellte Digitalisiertablett ähnelt dem in Fig. 1 dargestellten, mit der Ausnahme, daß die Dioden 3 fortgelassen sind. Außerdem ist der Meßaufnehmer 8 als Sender verwendet, dem ein sich ändernder Strom zugeführt wird, und die Gitterleiter 2a bis 2f dienen als Empfänger.

Die Gitterleiter 2a bis 2f sind mit ihrer einen Seite mit einer geerdeten Sammelleitung 27 verbunden, während die anderen Enden der Gitterleiter über jeweils einen steuerbaren Schalter 5 mit einer Signalleitung 28 verbunden sind, welche an einen Operationsverstärker führt, dessen Ausgang auf einen Tiefpaß zweiter Ordnung 30 geschaltet ist, der aus den Widerständen 31 und 32 und den Kondensatoren 33 und 34 besteht.

Der Ausgang 35 dieses Tiefpaßfilters ist mit einer Auswerteschaltung (nicht dargestellt) verbunden.

Beim Betrieb des Digitalisiertabletts nach Fig. 7 wird dem Meßaufnehmer 8 über die Klemmen 36 und 37 ein sich ändernder Strom zugeführt. Dieser Strom kann verschiedene Kurvenformen haben, wird jedoch vorteilhafter Weise mit einem Strom gespeist, der einen dreieckigen oder sägezahnförmigen Verlauf hat, wie in den Fig. 8b bis 8d dargestellt ist.

Beim Betrieb der Schaltung werden nacheinander die Gitterleiter 2a bis 2f aktiviert, d.h. durch Schließen der Schalter 5a bis 5f mit der Signalleitung 28 verbunden. In Fig. 8a sind die Aktivierungszeiten für die einzelnen Gitterleiter 2a bis 2f schraffiert dargestellt. Man erkennt, daß zwischen den Schließzeiten kurze Umschaltpausen 38 vorhanden sind.

Fig. 8b zeigt den Verlauf eines Stromes mit dreieckiger Kurvenform, der dem Meßaufnehmer 8 zugeführt wird. Mann erkennt, daß diejenigen Stellen, an denen der Strom von der ansteigenden in die abfallende Flanke übergeht, oder umgekehrt, jeweils in eine Umschaltpause fällt, daß also die Gitterleiter jeweils nur in Bereichen der Flanken angeschaltet sind, in denen deren Neigung konstant bleibt. Dies hat zur Folge, daß die in den Gitterleitern induzierte Spannung konstant bleibt und nur von der Lage des Meßaufnehmers zu dem jeweils aktivierten Gitterleiter abhängt, wenn man von der Polaritätsumkehr zwischen aufeinanderfolgenden Gitterleitern absieht. Diese Polaritätsumkehr kann auf an sich bekannte Weise, etwa durch eine Schalteinrichtung (nicht dargestellt) aufgehoben werden.

Fig. 8c zeigt einen Erregerstrom mit sägezahnförmigem Kurvenverlauf, bei dem der Strom über die Abtastperioden jeweils zweier aufeinanderfolgender Gitterleiter ansteigt und sodann in einer Umschaltpause wieder auf Null zurückgeht. Bei Verwendung eines derartigen Erregerstromes erfolgt keine Polaritätsumkehr der in den aufeinanderfolgenden Gitterleitern 2a bis 2f induzierten Gleichspannungen, so daß auf der Signalleitung 28 eine Spannung auftritt, deren Verlauf der in Fig. 3 dargestellten Kurvenform entspricht. Die beim Abschalten des Erregerstromes in den Gitterleitern auftretende Induktionsspannungsspitze gelangt nicht auf den Tiefpaß 30, da ja während dieses Stromsprunges keiner der Schalter 5 geschlossen ist.

Fig. 8d zeigt einen sägezahnförmigen Stromverlauf, wobei die Anstiegsflanke des Stromes sich über einen gesamten Abtastzyklus erstreckt, d.h. über eine Zeit, in der die Gitterleiter 2a bis 2f nacheinander aktiviert, d.h. angeschaltet worden sind. Hierbei tritt die geringstmögliche Störspannungssignalamplitude auf, da ja an den Gitterleitern 2a bis 2f nur Gleichspannungen auftreten.

Die Koordinatenmeßvorrichtung läßt sich vorteilhafter Weise auch in Verbindung mit der gleichzeitig eingereichten Erfindung des Anmelders verwenden, gemäß der bei Verwendung der Gitterleiter als Sender mindestens zwei benachbarte Gitterleiter gegensinnig von Strom durchflossen werden, wodurch eine differenzierende Wirkung erzielt wird, so daß in dem Meßaufnehmer 8 bereits ein einfach differenziertes Signal auftritt. Dadurch läßt sich die Auswerteschaltung weiter vereinfachen.

## Patentansprüche

1. Koordinatenmeßvorrichtung mit einem Digitalisiertablett (1), das für jede Koordinate mit mehreren in gleichem Abstand voneinander angeordneten Gitterleitern (2) versehen ist, die über eine Schaltvorrichtung (5) jeweils während mindestens eines jeweils gleichwirkenden Teiles einer ansteigenden und/oder abfallenden Flanke eines einen Koordinatenmeßaufnehmer (8) speisenden Stromes aktiviert werden, und mit einer Auswerteschaltung für ein Meßsignal, das durch Filterung eines in den jeweils aktivierten Gitterleitern (2) erzeugten Induktionssignals mittels eines linearen Filters (30) gewonnen wird, dadurch gekennzeichnet, daß der den Koordinatenmeßaufnehmer (8) speisende Strom einen dreieckförmigen Verlauf hat.

2. Koordinatenmeßvorrichtung nach Anspruch 1, dadurch gekennzeichnet, daß die ansteigende und die abfallenden Flanke des Stromes den selben Absolutwert der Steigung aufweisen, daß die Gitterleiter (2) sowohl während der ansteigenden als auch während der abfallenden Flanke des Stromes aktiviert werden und daß der Übergang von einer zur darauffolgenden Flanke des Stromes jeweils während der Umschaltpausen der Schaltvorrichtung (5) erfolgt.

3. Koordinatenmeßvorrichtung nach Anspruch 1, dadurch gekennzeichnet, daß der Strom einen sägezahnförmigen Verlauf hat.

4. Koordinatenmeßvorrichtung nach einem der Ansprüche 1 bis 3, dadurch gekennzeichnet, daß die Frequenz des Stromes gleich der Umschaltfrequenz der Schaltvorrichtung (5) ist.

5. Koordinatenmeßvorrichtung nach einem der Ansprüche 1 bis 3, dadurch gekennzeichnet, daß das Verhältnis der Umschaltfrequenz der Schaltvorrichtung (5) zu der Frequenz des Stromes eine ganze Zahl zwischen eins und der Anzahl der Umschaltvorgänge pro Abtastzyklus ist.

6. Koordinatenmeßvorrichtung nach einem der Ansprüche 1 bis 3, dadurch gekennzeichnet, daß diejenigen Flanken des Stromes, während denen eine Aktivierung der Gitterleiter (2) erfolgt, sich über eine Zeitdauer erstrecken, die mindestens gleich der Dauer eines Abtastzyklus der Gitterleiter (2) ist und daß jeder Abtastzyklus jeweils während des Auftretens dieser Flanke abläuft.

7. Koordinatenmeßvorrichtung mit einem Digitalisiertablett (1), das für jede Koordinate mit mehreren in gleichem Abstand voneinander angeordneten Gitterleitern (2) versehen ist, die über eine Schaltvorrichtung (5) in bestimmter Reihenfolge aktivierbar sind, wobei den aktivierten Gitterleitern (2) ein zur Erzeugung einer Induktionsspannung geeigneter Strom zugeführt wird, mit einem induktiven Koordinatenmeßaufnehmer (8) und mit einer Auswerteschaltung für ein Meßsignal, das durch Filterung eines in dem Koordinatenmeßaufnehmer (8) erzeugten Induktionssignals mittels eines linearen Filters (11, 12) gewonnen wird, dadurch gekennzeichnet, daß die aktivierten Gitterleiter (2) mit einem konstanten Gleichstrom gespeist werden.

8. Koordinatenmeßvorrichtung nach einem der Ansprüche 1 bis 7, dadurch gekennzeichnet, daß die Umschaltpausen (15; 38) der Schaltvorrichtung (5) kleiner sind als die Aktivierungszeiten (14) der Gitterleiter (2).

9. Koordinatenmeßvorrichtung nach einem der Ansprüche 1 bis 7, dadurch gekennzeichnet, daß die Umschaltpausen (15; 38) mindestens um den Faktor drei und vorzugsweise um den Faktor zehn kleiner sind als die Aktivierungszeiten (14) der Gitterleiter (2).

10. Koordinatenmeßvorrichtung nach einem der Ansprüche 1 bis 7, dadurch gekennzeichnet, daß die Schaltvorrichtung (5) so beschaffen ist, daß sie ohne Umschaltpausen (15; 38) umschaltet.

11. Koordinatenmeßvorrichtung nach einem der Ansprüche 1 bis 10, dadurch gekennzeichnet, daß das Filter (11, 12; 30) ein Tiefpaßfilter mit einer Grenzfrequenz ist, die kleiner als die Schaltfrequenz der Schaltvorrichtung ist.

12. Koordinatenmeßvorrichtung nach Anspruch 11, dadurch gekennzeichnet, daß das Filter (30) ein Tiefpaßfilter höherer Ordnung ist.

## Claims

1. A coordinate-measuring device comprising a digitising tablet (1) which, for each coordinate, is provided with a number of equally-spaced grid conductors (2) which are each activated by a switching device (5) during at least one similarly-acting part of a rising and/or falling flank of a current supplying a coordinate-measuring pick-up (8), the device also comprising a circuit for evaluating a measured signal obtained by using a linear filter (30) to filter an induction signal generated in the respectively activated grid conductors (2), characterised in that the current supplying the coordinate-measuring pick-up (8) follows a triangular curve.

2. A coordinate-measuring device according to claim 1, characterised in that the rising and the falling flank of the current have the same absolute gradient, the grid conductors (2) are activated during both the rising and the falling flank of the current, and each transition from one current flank to the next occurs during the pauses between switching over the switching device (5).

3. A coordinate-measuring device according to claim 1, characterised in that the current follows a saw-tooth curve.

4. A coordinate-measuring device according to any of claims 1 to 3, characterised in that the frequency of the current is equal to the switching-over frequency of the switching device (5).

5. A coordinate-measuring device according to any of claims 1 to 3, characterised in that the ratio of the switching-over frequency of the switching device (5) to the frequency of the current is an integer between unity and the number of switching-over processes per scanning cycle.

6. A coordinate-measuring device according to any of claims 1 to 3, characterised in that those flanks of the current during which the grid conductors (2) are activated extend over a time equal at least to the duration of a scanning cycle of the grid conductors (2), and each scanning cycle occurs during the flank.

7. A coordinate-measuring device comprising a digitising tablet (1) which, for each coordinate, is provided with a number of equally-spaced grid conductors (2) which can be activated in a given sequence by a switching device (5), the activated grid conductors (2) being supplied with a current suitable for generating an induction voltage, the device also comprising an inductive coordinate-measuring pick-up (8) and with a circuit for evaluating a measuring signal obtained by using a linear filter (11, 12) to filter an induction signal generated in the coordinate-measuring pick-up (8), characterised in that the activated grid conductors (2) are supplied with a constant d.c.

8. A coordinate-measuring device according to any of claims 1 to 7, characterised in that the pauses (15; 38) between switching over the switching device (5) are shorter than the activation times (14) of the grid conductors (2).

9. A coordinate-measuring device according to any of claims 1 to 7, characterised in that the pauses (15; 38) between switching over are less than the activation times (14) of the grid conductors (2) by a factor of at least three and preferably by a factor of ten.

10. A coordinate-measuring device according to any of claims 1 to 7, characterised in that the switching device (5) is designed so that it switches over without pauses (15; 38).

11. A coordinate-measuring device according to any of claims 1 to 10, characterised in that the filter (11, 12; 30) is a low-pass filter having a cut-off frequency lower than the switching frequency of the switching device.

12. A coordinate-measuring device according to claim 11, characterised in that the filter (30) is a higher-order low-pass filter.

## Revendications

1. Dispositif de mesure de coordonnées comportant une table à numériser (1) qui est munie de conducteurs à grilles (2) équidistants les uns des autres pour chaque coordonnée, ces conducteurs étant activés par un dispositif de commutation (5) chaque fois pendant au moins l'une des parties de même effet d'un flanc ascendant et/ou descendant d'un courant alimentant un capteur de mesure de coordonnées (8) et un circuit d'exploitation pour un signal de mesure qui par filtrage d'un signal d'induction créé dans les conducteurs à grilles (2), chaque fois activé, signal obtenu par l'intermédiaire d'un filtre linéaire (30), dispositif caractérisé en ce que le courant qui alimente le capteur de mesure de coordonnées (8) correspond à une courbe en triangle.

2. Dispositif de mesure de coordonnées selon la revendication 1, caractérisé en ce que le flanc ascendant et le flanc descendant du courant ont la même pente en valeur absolue, en ce que les conducteurs à grilles (2) sont activés à la fois pendant le flanc montant et pendant le flanc descendant du courant et en ce que le passage du courant d'un flanc à l'autre se fait chaque fois pendant les intervalles de commutation du dispositif de commutation (5).

3. Dispositif de mesure de coordonnées selon la revendication 1, caractérisé en ce que le courant a une forme en dents de scie.

4. Dispositif de mesure de coordonnées selon l'une des revendications 1 à 3, caractérisé en ce que la fréquence du courant est égale à la fréquence de commutation du dispositif de commutation (5).

5. Dispositif de mesure de coordonnées selon l'une des revendications 1 à 3, caractérisé en ce que le rapport entre la fréquence de commutation du dispositif de commutation (5) et la fréquence du courant est un nombre entier compris entre l'unité et le nombre des commutations par cycle de balayage.

6. Dispositif de mesure de coordonnées selon l'une des revendications 1 à 3, caractérisé en ce que les flancs du courant pendant lesquels il y a activation des conducteurs de grille (8) s'étendent sur une durée qui est au moins égale à la durée d'un cycle de balayage des conducteurs à grilles (2) et en ce que chaque cycle de balayage se déroule pendant que dure ce flanc.

7. Dispositif de mesure de coordonnées comportant une table à numériser (1) qui comporte plusieurs conducteurs à grilles (2) équidistants pour chaque coordonnée, ces conducteurs étant activés dans un ordre déterminé par un dispositif de commutation (5), les conducteurs à grilles, activés (2) recevant un courant approprié pour créer une tension d'induction, un capteur de mesure de coordonnées (8) par induction et un circuit d'exploitation pour un signal de mesure donnant par filtrage d'un signal d'induction généré dans le capteur de coordonnées (8), par un filtre linéaire (11, 12), dispositif caractérisé en ce que les conducteurs à grilles (2) activés sont alimentés par un courant continu, constant.

8. Dispositif de mesure de coordonnées selon l'une des revendications 1 à 7, caractérisé en ce que les intervalles de commutation (15 ; 38) du dispositif de commutation (5) sont inférieurs aux durées d'activation (14) des conducteurs à grilles (2).

9. Dispositif de mesure de coordonnées selon l'une des revendications 1 à 7, caractérisé en ce que les intervalles de commutation (15, 38) sont inférieurs d'au moins un facteur 3 et de préférence d'un facteur 10 aux durées d'activation (14) des conducteurs à grilles (2).

10. Dispositif de mesure de coordonnées selon l'une des revendications 1 à 7, caractérisé en ce que le dispositif de commutation (5) est tel qu'il commute sans intervalle de commutation (15, 38).

11. Dispositif de mesure de coordonnées selon l'une des revendications 1 à 10, caractérisé en ce que le filtre (11, 12, 30) est un filtre passe bas présentant une fréquence limite inférieure à la fréquence de commutation du dispositif de commutation.

12. Dispositif de mesure de coordonnées selon la revendication 11, caractérisé en ce que le filtre (30) est un filtre passe base d'ordre supérieur.

**Fig.1**

**Fig.2**

*Fig.5*

*Fig.6*

*Fig.3*

*Fig.4*

Fig.7

Fig.8

t